# EUROPEAN PATENT SPECIFICATION

(11) **EP 2 569 071 B1**
(45) Date of publication and mention of the grant of the patent: **08.07.2015**
(21) Application number: 11720430.5
(22) Date of filing: 09.05.2011
(51) Int. Cl.: B01D 15/36, C01B 9/08, C07B 59/00

(54) **METHOD FOR THE DIRECT ELUTION OF REACTIVE [18F]FLUORIDE FROM AN ANION EXCHANGE RESIN IN AN ORGANIC MEDIUM SUITABLE FOR RADIOLABELLING WITHOUT ANY EVAPORATION STEP BY THE USE OF ALKALIMETAL AND ALKALINE EARTH METAL CRYPTATES**
VERFAHREN ZUR DIREKTEN ELUTION VON REAKTIVEM [18F] FLUORID VON EINEM ANIONENAUSTAUSCHERHARZ IN EINEM FÜR DIE RADIOMARKIERUNG GEEIGNETEN ORGANISCHEN MEDIUM OHNE VERDAMPFUNGSSCHRITT DURCH VERWENDUNG VON ALKALIMETALL-UND ERDALKALIMETALLCRYPTATES
PROCÉDÉ POUR L'ÉLUTION DIRECTE DE [18F]-FLUORURE RÉACTIF À PARTIR D'UNE RÉSINE ÉCHANGEUSE D'ANIONS DANS UN MILIEU ORGANIQUE APPROPRIÉ POUR LE RADIOMARQUAGE SANS AUCUNE ÉTAPE D'ÉVAPORATION À L'AIDE DE CRYPTATES DE MÉTAUX ALCALINS ET DE MÉTAUX ALCALINOTERREUX

(30) Priority: 03.11.2010 US 409719 P; 10.05.2010 US 332981 P
(43) Date of publication of application: 20.03.2013
(73) Proprietor: Technische Universität München, 81675 München (DE)
(72) Inventor: WESTER, Hans-Jürgen, Peter, 85304 Ilmmünster (DE); HENRIKSEN, Gjermund, 82319 Starnberg (DE); WEßMANN, Sarah, Hedwig, 81547 München (DE)
(74) Representative: Wichmann, Hendrik
(86) International application number: PCT/EP2011/057392
(87) International publication number: WO 2011/141410

(56) References cited:
- EP-A1- 1 990 310
- WO-A1-2008/101305
- GATLEY ET AL: "Rapid production and trapping of [<18>F]fluorotrimethylsilane, and its use in nucleophilic fluorine-18 labeling without an aqueous evaporation step", APPLIED RADIATION AND ISOTOPES, INTERNATIONAL JOURNAL OFRADIATION APPLICATIONS AND INSTRUMENTATION, PART A, PERGAMON PRESS LTD, GB, vol. 40, no. 6, 1 January 1989 (1989-01-01), pages 541-544, XP024706468, ISSN: 0883-2889, DOI: 10.1016/0883-2889(89)90143-3 [retrieved on 1989-01-01]
- WILSON ET AL: "Radiosynthesis and initial evaluation of [<18>F]-FEPPA for PET imaging of peripheral benzodiazepine receptors", NUCLEAR MEDICINE AND BIOLOGY, ELSEVIER, NY, US, vol. 35, no. 3, 17 March 2008 (2008-03-17) , pages 305-314, XP022537631, ISSN: 0969-8051, DOI: 10.1016/J.NUCMEDBIO.2007.12.009
- N. A. GOMZINA ET AL: RADIOCHEMISTRY, vol. 44, no. 4, 1 January 2002 (2002-01-01), pages 403-409, XP55002651, ISSN: 1066-3622, DOI: 10.1023/A:1020689314452
- LEMAIRE: "Fast production of highly reactive no-carrier-added [18F] fluoride for the labeling of radiopharmaceuticals", ANGEWANDTE CHEMIE (INTERNATIONAL ED. IN ENGLISH), vol. 49, no. 18, 25 March 2010 (2010-03-25), pages 3161-3164, XP55000072, ISSN: 0044-8249, DOI: 10.1002/anie.200906341

## Description

### Technical field

The present invention relates to methods for the preparation of reactive [¹⁸F] fluoride in a form suitable for efficient radiolabeling without an evaporation step by the use of an anion exchange resin and alkalimetal cryptates.

### Background art

[¹⁸F] fluoride is produced by irradiation of water, containing H₂¹⁸O, with protons resulting in the reaction ¹⁸O(p,n)¹⁸F. Only a minor fraction of the [¹⁸0] is converted. The [¹⁸F] isotope is then separated from the water and processed for production of a radiopharmaceutical agent.

In the current practice, fluoride recovery is based on the use of an anion-exchange resin. The recovery is carried out in two steps, extraction and elution: first the anions (not only fluoride) are separated from the enriched [¹⁸0] water and trapped on the said resin (Coenen et al., J. Labelled Compd. Radiopharm., 1986, vol. 23, pp. 455-467). The anions, including [¹⁸F]fluoride, are then eluted into a mixture containing water, organic solvents, an activating agent or phase transfer agent or phase transfer catalyst, such as for example the complex potassium carbonate-Kryptofix 222 (K₂CO₃-K222) or a tetrabutylammonium salt. The [¹⁸F]fluoride radiochemical recovery yield is very effective, usually exceeding 99%.

The most usual labeling method, known as nucleophilic substitution, requires anhydrous or very low water content solutions. Thus, an evaporation step (or drying step) after [¹⁸F] fluoride recovery to remove the excess water is still necessary. It usually consists in multiple azeotropic evaporations with acetonitrile or low boiling temperature organic solvent. Such evaporations require several minutes (Schlyer et al., Appl. Radiat. Isot., 1990, vol. 40, pp. 1-6).

The current trend in the automated preparation of radiopharmaceuticals for medical imaging is to develop "Lab-on-chip" devices. The aforementioned evaporation step is very difficult to implement within such a "Lab-on-chip" device. Recently, a method has been described avoiding a drying step prior to radiolabeling with [¹⁸F]fluoride. This method based on the use of organic bases that allows for the removal of [¹⁸F]fluoride from an anion exchange cartridge and subsequent labeling when small amounts of water are present or H-acidic compounds are added (WO 2009/003251 A1).

### Aims of the invention

The current invention aims at avoiding the need for any evaporation after the elution of the anion- exchange resin.

Further the invention aim to reduce the duration of preparation, which results in an increase of the overall radiochemical yield.

A still further aim of the invention is to simplify the automated radiosynthesis equipment used for the synthesis of a radiotracer.

Further the invention aims at making the method suitable for implementation into automated "Lab-on- chip" systems.

### Disclosure of the invention

The method of the invention allows the preparation of a reactive [¹⁸F]fluoride solution for nucleophilic substitution reactions on both aliphatic and aromatic precursors, without any azeotropic evaporation step. The reduction of the duration of preparation results in an increase of the overall yield, and a simplification of the automated equipment needed for the synthesis of a radiotracer. In particular, the suppression of any azeotropic evaporation step facilitates the implementation of the synthesis on microfluidic devices such as "lab-one-chip" in which these evaporations are difficult to perform.

It must be noted that, according to the invention, the subsequent radiolabelling is performed using the established organic solvents, thus under identical conditions as used in the methods of prior art.

According to the invention, the eluting medium or solution is an organic solution containing at least the following species: an organic solvent suitable for a subsequent radiolabelling reaction, i.e. a polar aprotic solvent, a first compound (A) which is a cryptand and a second compound (B) that is a metal hydroxide.

The elution process is made possible by the use of hydroxide ions that can exchange with the fluoride trapped on the resin and cryptates that allows the fluoride to be solubilized in the eluting medium, and by using appropriate amounts of compound (A) and (B). The cryptate-hydoxide is thus acting as an activating agent or phase transfer agent or phase transfer catalyst allowing to remove and to elute [¹⁸F]fluoride from the anion exchange resin in the absence of water.

Organic solvents suitable for radiolabeling, i.e. polar aprotic solvents, are organic solvents that have dipoles due to polar bonds, don't have H atoms that can be donated into a H-bond and in which anions are not solvated but are "naked" which allows them to be reactive as nucleophile for substitution reactions. These solvents are defined by the IUPAC (IUPAC, 1994, 66, 1077 (Glossary of terms used in physical organic chemistry (IUPAC Recommendations 1994)) on page 1106) as: "solvents with a comparatively high relative permittivity (or dielectric constant), greater than ca. 15, and a sizable permanent dipole moment, that cannot donate suitably labile hydrogen atoms to form strong hydrogen bonds, e.g. dimethyl sulfoxide, ... Such solvents are usually not aprotic but protophilic (and at most weakly protogenic)...".

Chemicals suitable as compound (A) are cryptands that allow for efficient complexation of alkali or alkaline earth metals. One example for such a cryptand is as 4,7,13,16,21,24-Hexaoxa-1,10-diazabicyclo[8.8.8]hexacosane (2,2,2-Cryptand, Kryptofix 222).

According to the present invention, the eluted solution is directly usable for a radiolabeling reaction, that is no evaporation for water elimination is required. Thus, the [¹⁸F] activity remains at all times in solution after the elution of the anion exchange resin, contrary to the methods of prior art where it is recovered in a "dry form" on the surface of a reactor as a result of the evaporation step.

According to the present invention, said elution step is performed by passing the eluting solution through a solid phase extraction column containing an anion-exchange resin. The [¹⁸F] fluoride is released from the resin in the eluting medium as specified above and is immediately usable for efficient radiolabeling, even, depending on the reactivity of the substrate to be labeled, at room temperature.

Prior to the elution sequence, a purging sequence comprising a flush of gas such as air, nitrogen or argon is be used to purge the column and eliminate most of the remaining H₂¹⁸O.

After this step and prior to the elution step, the column is rinsed with an organic solvent that allows the elimination of the residual water that may be undesirable for a subsequent chemical processing, i.e. nucleophilic substitution, whilst keeping the extracted anions trapped on the resin. This organic solvent is selected among solvents suitable for the subsequent radiolabeling reaction

The organic solvent can be selected among acetonitrile (MeCN), dimethylsulfoxide (DMSO), dimethylacetamide (DMAA), dimethylformamide (DMF), tetrahydrofuran (THF) or other solvents that are used in the methods of prior art.

More specifically, according to the invention, the eluting medium is a dry solvent containing the preformed cryptate of compound (A) and the compound (B).

In some embodiments of the present invention, the solvent used for the elution step is preferably selected from the group consisting of primary alcohols such as methanol, ethanol, n-propanol, n-butanol, amyl alcohol, n-hexyl alcohol, n-heptanol, benzyl alcohol or n-octanol, and secondary alcohols such as isopropanol, isobutanol, isoamyl alcohol or 3-pentanol.

In some embodiments of the present invention, the solvent used for the elution step is preferably selected from the group consisting of tertiary alcohols, diols and polyols with 1 to 20 tertiary alcohol functions such as t-butanol, t-amyl alcohol, 2, 3-dimethyl- 2-butanol, 2-(trifluoromethyl) -2-propanol, 2, 8-dimethyl- 2, 8-Decanediol or 2 , 5-dimethyl-3-Octyne-2 , 5-diol.. In this context, it has been shown by CHI, D. Y. et al [A New Class of SN2 Reactions Catalyzed by Protic Solvents: Facile Fluorination for Isotopic Labeling of Diagnostic Molecules, J. Am. Chem. Soc., Vol.128, 50 (2006) pp.16394-16397*;* WO-A-2006/065038*]* that the addition of some tertiary alcohols to the reaction mixtures subsequently to elution, usually composed of acetonitrile with the relevant precursor, does not impact unfavorably on the subsequent nucleophilic substitution reaction ("SN2" reactions).

In some embodiments of the present invention, the anion exchange resin may subsequently, after the elution, be flushed with a solution of the precursor.

The eluted organic solution containing the [¹⁸F] fluoride can be used for the synthesis of a PET radiotracer. The [¹⁸F] fluoride is then reactive, without any subsequent evaporation step, for substitution reactions on both aliphatic and aromatic precursors.

In some embodiments of the present invention, a suitable cryptate, or organic molecule or organic salt acting as a phase transfer catalyst, identical to or different of the cryptate one used for the elution step can be added prior to labelling in the eluted [¹⁸F] fluoride solution to improve the radiolabeling yield.

### Description of a preferred embodiment of the invention

### EXAMPLES

### Example 1. Trapping and release of [¹⁸F]fluoride by means of anion exchange resin.

"QMA light" anion exchange cartridge (Cl⁻ form, Waters) was conditioned by flushing the resin subsequently with 1 M KOH, (2 ml), water (20 ml), 1 M K₂CO₃ (2 ml), water (20 ml), and finally 5 ml air (conditioning QMA 1).

Alternatively, "QMA light" anion exchange cartridge (Cl⁻ form, Waters) was conditioned by flushing the resin subsequently with 1 M K₂CO₃ (2 ml), water (20 ml), and finally 5 ml air (conditioning QMA 2). Alternatively, "QMA light" anion exchange cartridge (Cl⁻ form, Waters) was conditioned by flushing the resin subsequently with 1 M KOH, (2 ml), water (20 ml), 1 M KHCO₃ (2 ml), water (20 ml), and finally 5 ml air (conditioning QMA 3).

"PSA-HCO₃" anion exchange cartridge (HCO₃⁻ form, Machery-Nagel) was conditioned by applying 3 ml MeOH followed by 3 ml H₂O (conditioning PSA 1).

Alternatively, "PSA-HCO₃" anion exchange cartridge (HCO₃⁻ form, Machery-Nagel) was conditioned by applying 0,5 mL H₂O (conditioning PSA 2).

Alternatively, "PSA-HCO₃" anion exchange cartridge (HCO₃⁻ form, Machery-Nagel) was conditioned by applying
with 1 M KOH, (2 ml), water (20 ml), 1 M K₂CO₃ (2 ml), water (20 ml), and finally 5 ml air (conditioning PSA 3).

If not mentioned, commercially available cartridge amounts were used.

Aqueous [¹⁸F]fluoride obtained via the ¹⁸O(p,n)¹⁸F nuclear reaction was applied to the cartridge in question, the cartridge purged with 1 ml air and subsequently eluted with anhydrous 5 ml MeCN. [¹⁸F]fluoride was quantitatively retained on the cartridge during these steps.

Elution of [¹⁸F]fluoride from the cartridge was evaluated with azeotropically dried solutions of [K⁺2.2.2]OH⁻ of different concentrations:
[K⁺2.2.2]OH⁻ in acetonitrile:
   solution A: 167.7 mM in KOH and 250 mM in Kryptofix 2.2.2.

500 µL of 1M KOH and 282,4 mg Kryptofix 2.2.2. were mixed, and azeotropically dried by portion wise addition of anhydrous MeCN while heating at 105 °C. Three ml of anhydrous CH₃CN was added to the residue.

Alternatively, the residue was dissolved in three ml of anhydrous t-butanol (solution A2) or three ml of anhydrous amyl alcohol (solution A3).

### solution B: 334 mM in KOH and in 500 mM Kryptofix 2.2.2.

666 µl 1M KOH and 376 mg Kryptofix 2.2.2. were mixed and azeotropically dried by portion wise addition of anhydrous MeCN while heating at 105 °C. Two ml of anhydrous CH₃CN was added to the residue.

### solution C: 83.9 mM in KOH and 125 mM in Kryptofix 2.2.2.

125 µl 1M KOH and 70.5 mg Kryptofix 2.2.2. were mixed and azeotropically dried by portion wise addition of anhydrous MeCN while heating at 105 °C. One and a half ml of anhydrous CH₃CN was added to the residue.

Elution were tested using solvents of different cryptate concentrations (Figure A), different QMA conditioning procedures (Figure B), different "PSA" conditioning procedures (Figure C), different types of anion exchange cartridges (Figure D), different sorbent amounts for "QMA light" anion exchange resin (Figure E), different sorbent amounts of "PSA" anion exchange resin (Figure F), different types of anion exchange cartridge with similar sorbent amount (Figure G), different counter ions of "QMA light" cartridges (Figure H) and different counter ions of "PSA" anion exchange cartridges (Figure I), [K⁺2.2.2]OH in different solvents (Figure J).

### Example 2. ¹⁸F-fluorination of precursors

¹⁸F-labelling reactions were examined using fractions of [K⁺2.2.2]OH⁻-eluate, total cartridge elution volumes of [K⁺2.2.2]OH⁻-solution, using increasing fraction volumes of [K⁺2.2.2]OH⁻-eluate (with measuring pH-values with increasing fraction volumes of [K⁺2.2.2]OH⁻-eluate), using fractions of [K⁺2.2.2]OH⁻ -eluate from cartridges with different sorbent amounts and counter ions, using separated [K⁺2.2.2]OH⁻-fractions from "QMA" anion exchange cartridge, using total cartridge elution volume of longer stored [K⁺2.2.2]OH⁻-solution, and finally using the total cartridge elution volume of [K⁺2.2.2]OH⁻solution in t-butanol.

### ¹⁸F-fluorination of precursors using fractions of [K⁺2.2.2]OH⁻-eluate

Aqueous [¹⁸F]fluoride obtained via the ¹⁸O(p,n)¹⁸F nuclear reaction was applied to a "QMA light" anion exchange cartridge which in advance had been conditioned by applying 1 M KOH (2 ml), water (20 ml), 1 M K₂CO₃ (2 ml), water (20 ml), and finally 5 ml air was purged through the cartridge. [¹⁸F]fluoride was retained quantitatively on the cartridge during these steps.

Elution of [¹⁸F]fluoride from the cartridge performed with an azeotropically dried solution of [K⁺2.2.2]OH⁻in acetonitrile (167.7 mM in KOH and 250 mM in Kryptofix 2.2.2.) (solution A).

For the ¹⁸F-fluorination, a fraction of [K⁺2.2.2]¹⁸F⁻ solution eluted from the resin was mixed with the precursor in question, in a total volume of the reaction mixture of 250 µl. The concentration of KOH was 33.2 mM and the concentration of [K⁺2.2.2] was 50 mM. After the desired time interval, the reaction was quenched and analyzed by means of radio thin layer chromatography.

| **Compound** | **Amount (mg)** | **Reaction temperature (°C)** | **Reaction time (min)** | **¹⁸F -incorporation efficiency, xₘₑₐₙ±sd [%], number of experiments #** |
|---|---|---|---|---|
| TET^{1,7} | 5 | 85 | 5 | 90 ± 4.0 (n=2) |
| TET¹ | 10 | 85 | 5 | 89.9 ± 5.0 n=2 |
| Mannose-Triflate² | 10 | 90 | 10 | 75.3 ± 4.7 n = 2 |
| Mannose-Triflate² | 20 | 90 | 10 | 82.7 ± 1.5 n = 2 |
| Tosyl-Fallypride³ | 2.5 | 95 | 10 | 75 ± 8 n=2 |
| 3-*N*-Boc-5'-O-dimethoxytrityl-3'-O-nosyl-thymidine⁴ | 10 | 95 | 10 | 70.2 ± 2.0 |
| 3-*N*-Boc-5'-O-dimethoxytrityl-3'-O-nosyl-thymidine⁴ | 20 | 95 | 10 | 54.0 ± 4.3 n=2 |
| 1-(2,3-Diacetyl-5-tosyl-(alpha-Darabinofuranosyl)-2-nitroimidazole⁵ | 10 | 95 | 10 | 72.1 ± 5.9 n=4 |

| | | | | |
|---|---|---|---|---|
| *# As measured by radio thin layer chromatography.* *¹ TET:* L-Tyrosine, O-[2-[[(4-methylphenyl)sulfonyl]oxy]ethyl]-N-(triphenylmethyl)-, 1,1-dimethylethyl ester. *² Tosyl-fallypride*: Benzamide, 2,3-dimethoxy-5-[3-[[(4-methylphenyl)sulfonyl]oxy] propyl]-N-[[1-(2-propenyl)-2-pyrrolidinyl]methyl]-, (S)-. *³Mannose triflate*: beta-D-mannopyranose, 1,3,4,6-tetraacetate 2-(trifluoromethanesulfonate). *⁴3-N-Boc-5'-O-dimethoxytrityl-3'-O-nosyl-thymidine*: 1(2H)-Pyrimidinecarboxylic acid, 3-[2-doxy-3-O-[(4-nitrophenyl)sulfonyl]-5-O-(triphenylmethyl)-beta-D-threo-pentofuranosyl]-3,6-dihydro-5-methyl-2,6-dioxo-, 1,1-dimethylethyl ester. *⁵1-(2,3-Diacetyl-5-tosyl-(alpha-Darabinofuranosyl)-2-nitroimidazole*: 1H-Imidazole, 1-[2,3-di-O-acetyl-5-O-[(4-methylphenyl)sulfonyl]-alpha-D-arabino-furanosyl]-2-nitro-. *⁶Tosyl-FHBG*: 6H-Purin-6-one, 1,9-dihydro-9-[3-[[(4-methoxyphenyl) diphenylmethoxy]methyl]- 4-[[(4-methylphenyl)sulfonyl]oxy]butyl]-2-[[(4-methoxyphenyl)diphenylmethyl]amino]- *⁷A previous attempt resulted in an efficiency of about 30%. An explanation for this result is that the TET charge used in this particular case was not fresh.* | | | | |

### ¹⁸F-fluorination of precursors using the total cartridge elution volume of [K⁺2.2.2]OH⁻-solution

Aqueous [¹⁸F]fluoride obtained via the ¹⁸O(p,n)¹⁸F nuclear reaction was applied to "QMA light" anion exchange cartridge in question which in advance had been conditioned by applying 1 M KOH (2 ml), water (20 ml), 1 M KHCO₃ (2 ml), water (20 ml), and finally 5 ml air through the cartridge. Alternatively, aqueous [¹⁸F]fluoride was applied to a "PSA" anion exchange cartridge which in advance had been conditioned by applying 3 mL MeOH and 3 mL H₂O. [¹⁸F]fluoride was retained quantitatively on the cartridge during these steps.

Elutions of [¹⁸F]fluoride from the cartridge were performed with an azeotropically dried solution of [K⁺2.2.2]OH⁻ in acetonitrile (167.7 mM in KOH and 250 mM in Kryptofix 2.2.2.) (solution A).

For the ¹⁸F-fluorination, cartridges were eluted with a [K⁺2.2.2]OH⁻-volume that allows ∼90 % ¹⁸F-recovery from the sorbent amount in question. Total [K⁺2.2.2]¹⁸F⁻-eluate was mixed with the precursor in question.

| | Volume of [K⁺2.2.2]OH⁻-eluate (µL] |
|---|---|
| 105 mg QMA | 480 |
| 35 mg QMA | 230 |
| 18 mg PS | 200 |

After the desired time interval, the reaction was quenched and analyzed by means of radio thin layer chromatography.

| **Compound, Reaction condition** | **Cartridge** | **Eluted volume (µl)** | **¹⁸F -incorporation efficiency, xₘₑₐₙ±sd [%], number of experiments #** |
|---|---|---|---|
| Benzyl bromoacetate¹ 5 mg, 85 °C, 5 min | 105 mg QMA-HCO₃⁻ | 480 | 89 |
| | 35 mg QMA-HCO₃⁻ | 230 | 85.0 ± 8.0 n = 3 |
| | 18 mg PS-HCO₃⁻ | 200 | 84.0 ± 1.0 n=2 |
| TET² 5 mg, 85 °C, 5 min | 105 mg QMA-HCO₃⁻ | 480 | 0 |
| | 35 mg QMA-HCO₃⁻ | 230 | 12 ± 5 n = 3 |
| | 18 mg PS-HCO₃⁻ | 200 | 3 |
| TET² 20 mg, 85 °C, 5 min | 35 mg QMA-HCO₃⁻ | 230 | 80.2 ± 3.0 |
| Mannose-Triflate³ 10 mg, 90 °C, 10 min | 105 mg QMA-HCO₃⁻ | 480 | 68.0 ± 1.0 n=2 |
| | 35 mg QMA-HCO₃⁻ | 230 | 69.0 ± 2.0 n = 2 |
| | 18 mg PS-HCO₃⁻ | 200 | 68.0 ± 1.0 n = 2 |
| 1-(2,3-Diacetyl-5-tosyl-(alpha-Darabinofuranosyl)-2-nitroimidazole 5 mg, 95 °C, 10 min | 105 mg QMA-HCO₃⁻ | 480 | 49 |
| | 35 mg QMA-HCO₃⁻ | 230 | 58.0 ± 1.0 n = 2 |
| | 18 mg PS-HCO₃⁻ | 200 | 55 |

| | | | |
|---|---|---|---|
| *# As measured by radio thin layer chromatography.* *¹* Benzyl bromoacetate: Bromoacetic acid benzyl ester *² TET:* L-Tyrosine, O-[2-[[(4-methylphenyl)sulfonyl]oxy]ethyl]-N-(triphenylmethyl)-, 1,1-dimethylethyl ester. *³ Mannose triflate*: beta-D-mannopyranose, 1,3,4,6-tetraacetate 2-(trifluoromethanesulfonate). | | | |

### ¹⁸F-fluorination using the total cartridge elution volume of [K⁺2.2.2]OH⁻-solution with increasing precursor amount

Aqueous [¹⁸F]fluoride obtained via the ¹⁸O(p,n)¹⁸F nuclear reaction was applied onto "QMA light" anion exchange cartridge (35 mg), preconditioned in the aforementioned manner. [¹⁸F]fluoride could be retained quantitatively on the cartridge.

Elutions of [¹⁸F]fluoride from the cartridge were performed with 230 µl of azeotropically dried [K⁺2.2.2]OH⁻ in acetonitrile (167.7 mM in KOH and 250 mM in Kryptofix 2.2.2.) (solution A). The entire [K⁺2.2.2]¹⁸F⁻-eluate was mixed with the precursor.

After the desired time interval, the reaction was quenched and analyzed by means of radio thin layer chromatography.

| **Compound, Reaction condition** | **Precursor (mg)** | **¹⁸F-incorporation efficiency, xₘₑₐₙ±sd [%], number of experiments** |
|---|---|---|
| TET¹ 85 °C, 5 min Using the entire eluted volume of ¹⁸F from the QMA | 5 | 12.0 ± 5 n = 2 |
| | 10 | 43 |
| | 15 | 73 |
| | 18 | 83.0 ± 3 n = 2 |
| | 20 | 80.2 ± 3.0 n = 2 |

| | | |
|---|---|---|
| *# As measured by radio thin layer chromatography.* *¹TET:* L-Tyrosine, O-[2-[[(4-methylphenyl)sulfonyl]oxy]ethyl]-N-(triphenylmethyl)-, 1,1-dimethylethyl ester. | | |

### ¹⁸F-fluorination of precursors using increasing fraction volumes of [K⁺2.2.2]OH⁻eluate

Aqueous [¹⁸F]fluoride obtained via the ¹⁸O(p,n)¹⁸F nuclear reaction was applied to 35 mg "QMA light" anion exchange cartridge in question which in advance had been conditioned by applying 1 M KOH (2 ml), water (20 ml), 1 M KHCO₃ (2 ml), water (20 ml), and finally 5 ml air was purged through the cartridge.

Alternatively, aqueous [¹⁸F]fluoride was applied to a 18 mg "PSA" anion exchange cartridge which in advance had been conditioned by applying 3 mL MeOH and 3 mL H₂O. [¹⁸F]fluoride was retained quantitatively on the cartridge during these steps.

Elutions of [¹⁸F]fluoride from the cartridge were performed with increasing fraction volumes of azeotropically dried [K⁺2.2.2]OH⁻ in acetonitrile 167.7 mM in KOH and 250 mM in Kryptofix 2.2.2.) (solution A).

For the ¹⁸F-fluorination, increasing volumes of [K⁺2.2.2]¹⁸F⁻-solution eluted from the resins were mixed with the precursor in a total volume of the reaction mixture of 250 µl. With 300 µL [K⁺2.2.2]¹⁸F⁻eluate total volume was 300 µL. The concentration of KOH and [K⁺2.2.2] was rising according to the added volume used for labelling. After the desired time interval, the reaction was quenched and analyzed by means of radio thin layer chromatography.

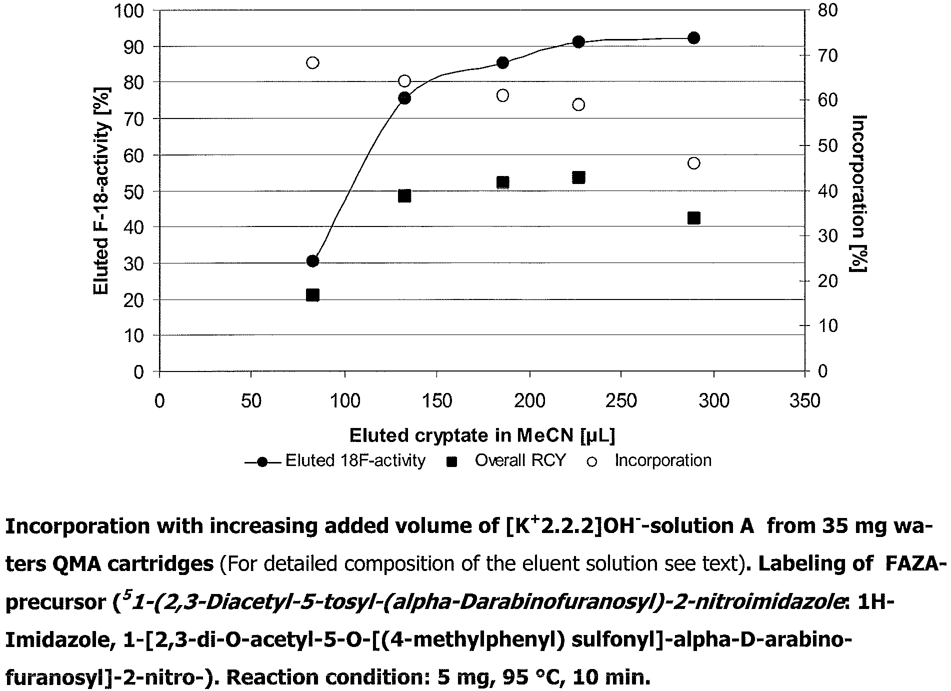

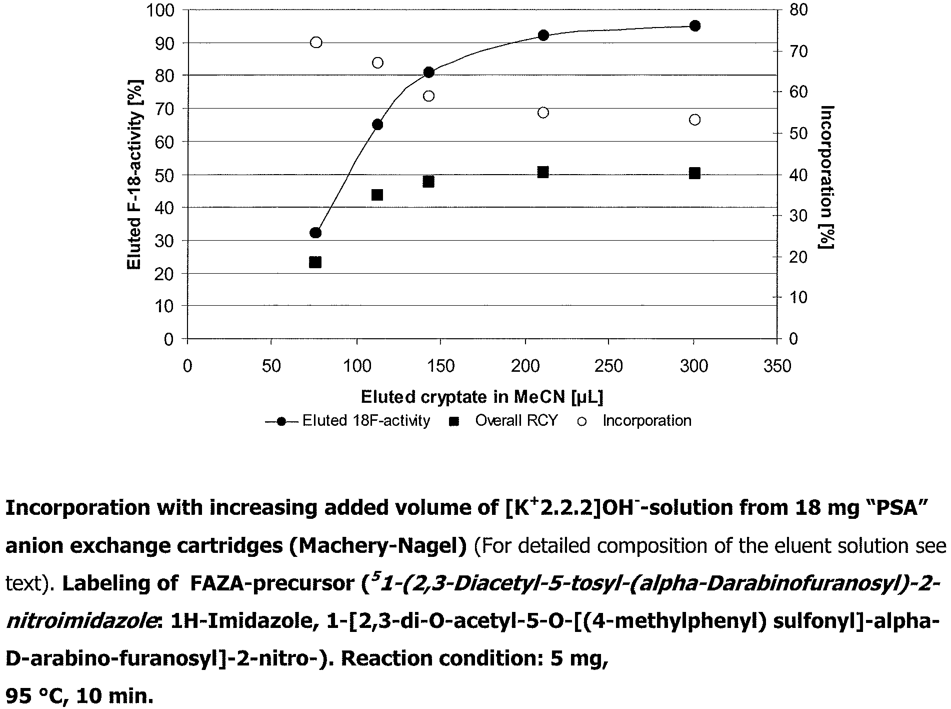

pH-values were measured after addition of different volumes of [K⁺2.2.2.]OH⁻ in H₂O (167.7 mM in KOH and 250 mM in Kryptofix 2.2.2.) to 35 mg QMA light anion exchange sorbent which in advance had been conditioned by applying 1 M KOH (2 ml), water (20 ml), 1 M KHCO₃ (2 ml), water (20 ml), and finally 5 ml air.

Alternatively, pH-values were measured after addition of different volumes of [K⁺2.2.2.]OH⁻ in H₂O (167.7 mM in KOH and 250 mM in Kryptofix 2.2.2.) to 18 mg "PSA" anion exchange sorbent which in advance had been conditioned by applying 3 mL MeOH and 3 mL H₂O.

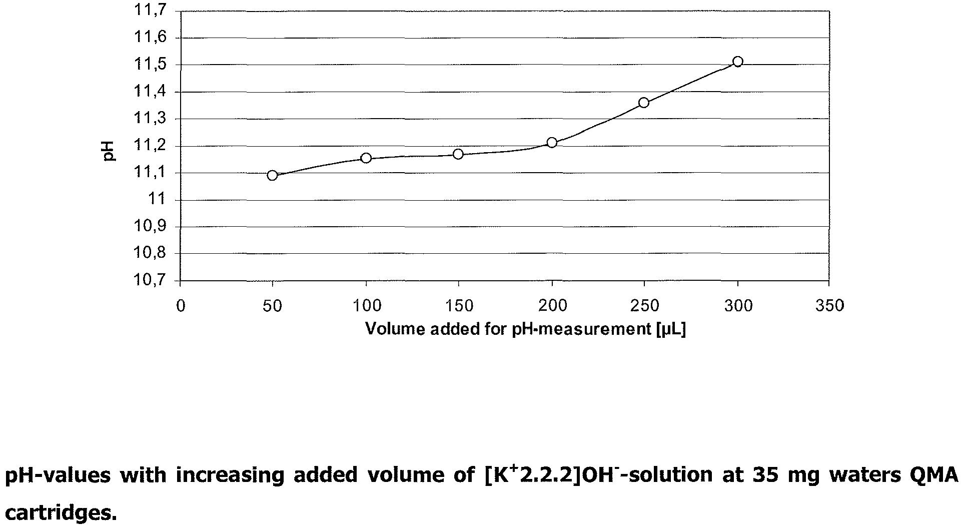

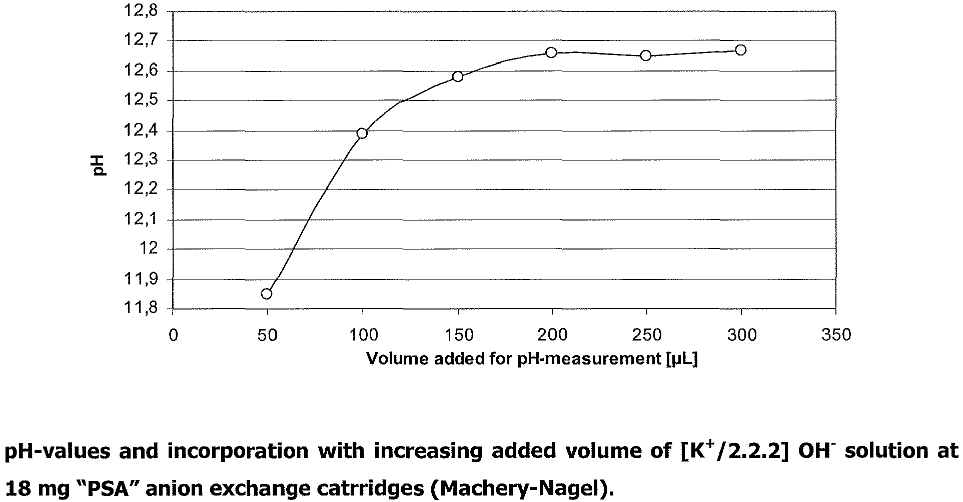

### ¹⁸F-fluorination using fractions of [K⁺2.2.2]OH⁻-eluate from anion exchange cartridge with different sorbent amounts

Aqueous [¹⁸F]fluoride obtained via the ¹⁸O(p,n)¹⁸F nuclear reaction was applied to a "QMA light" anion exchange cartridge in question which in advance had been conditioned by applying 1 M KOH (2 ml), water (20 ml), 1 M K₂CO₃ (2 ml), water (20 ml), and finally 5 ml air was purged through the cartridge. Alternatively, aqueous [¹⁸F]fluoride was applied to a "PSA" anion exchange cartridge which in advance had been conditioned by applying 3 mL MeOH and 3 H₂O. [¹⁸F]fluoride was retained quantitatively on the cartridge during these steps.

Elution of [¹⁸F]fluoride from the cartridge performed with an azeotropically dried solution of [K⁺2.2.2]OH⁻ in acetonitrile (167.7 mM in KOH and 250 mM in Kryptofix 2.2.2.) (solution A).

For the ¹⁸F-fluorination, cartridges with different sorbent amounts were eluted with a [K⁺2.2.2]OH⁻ volume in question (For detailed elution volume of the different sorbent see text above). For [K⁺2.2.2]¹⁸F⁻ solution was mixed with the precursor in a total volume of the reaction mixture of 250 µl. The concentration of KOH was 33.2 mM and the concentration of [K⁺2.2.2] was 50 mM. After the desired time interval, the reaction was quenched and analyzed by means of radio thin layer chromatography.

| **Cartridge** | **Amount [mg]** | **¹⁸F-incorporation efficiency, xₘₑₐₙ±sd [%], number of experiments¹** |
|---|---|---|
| **QMA-CO₃²⁻** | 105 | 69.0 ± 5.0 n = 2 |
| | 50 | 64 |
| | 35 | 64.0 ± 1.0 n=2 |
| **PS-HCO₃⁻** | 45 | 68 |
| | 18 | 60 |
| | 15 | 59.0 ± 3.0 n=2 |
| | 6,5 | 32.0 ± 1.0 n=2 |

| | | |
|---|---|---|
| *# As measured by radio thin layer chromatography.* *¹1-(2,3-Diacetyl-5-tosyl-(alpha-Darabinofuranosyl)-2-nitroimidazole*: 1H-Imidazole, 1-[2,3-di-O-acetyl-5-O-[(4-methylphenyl)sulfonyl]-alpha-D-arabino-furanosyl]-2-nitro-. | | |

### ¹⁸F-fluorination using fractions of [K⁺2.2.2]OH⁻-eluate from anion exchange cartridge with different counter ions

Aqueous [¹⁸F]fluoride obtained via the ¹⁸O(p,n)¹⁸F nuclear reaction was applied to a "QMA light" anion exchange cartridge in question which in advance had been conditioned by applying 1 M KOH (2 ml), water (20 ml), 1 M KHCO₃ (2 ml), water (20 ml), and finally 5 ml air was purged through the cartridge.

Alternatively, aqueous [¹⁸F]fluoride was applied to a "PSA" anion exchange cartridge which in advance had been conditioned by applying 3 mL MeOH and 3 H₂O. [¹⁸F]fluoride was retained quantitatively on the cartridge during these steps.

Alternatively, aqueous [¹⁸F]fluoride obtained via the ¹⁸O(p,n)¹⁸F nuclear reaction were applied to" QMA light" anion exchange and "PSA" anion exchange cartridges in question which in advance had been conditioned by applying 1 M KOH (2 ml), water (20 ml), 1 M K₂CO₃ (2 ml), water (20 ml), and finally 5 ml air was purged through the cartridges.

Elution of [¹⁸F]fluoride from the cartridges was performed with an azeotropically dried solution of [K⁺2.2.2]OH⁻ in acetonitrile (167.7 mM in KOH and 250 mM in Kryptofix 2.2.2.) (solution A).

For the ¹⁸F-fluorination, cartridges with different counterions were eluted with [K⁺2.2.2]OH⁻ volume in question.

(see text above). [K⁺2.2.2]¹⁸F⁻ solution was mixed with the precursor in a total volume of the reaction mixture of 250 µl. The concentration of KOH was 33.2 mM and the concentration of [K⁺2.2.2] was 50 mM. After the desired time interval, the reaction was quenched and analyzed by means of radio thin layer chromatography.

| **Cartridge** | **¹⁸F-incorporation efficiency, xₘₑₐₙ±sd [%], number of experiments** | |
|---|---|---|
| | **35 mg QMA** | **18 mg PS** |
| **CO₃²⁻** | 64.0 ± 1.0 n = 2 | 58 |
| **HCO₃⁻** | 67.0 ± 2.0 n = 2 | 59.0 ± 3.0 n = 2 |

| | | |
|---|---|---|
| *# As measured by radio thin layer chromatography.* *¹ Incorporation of 1-(2,3-Diacetyl-5-tosyl-(alpha-Darabinofuranosyl)-2-nitroimidazole*: 1H-Imidazole, 1-[2,3-di-O-acetyl-5-O-[(4-methylphenyl)sulfonyl]-alpha-D-arabino-furanosyl]-2-nitro-. Reaction condition: 10 mg, 95 °C, 10 min | | |

### ¹⁸F-fluorination of precursors using separated [K⁺2.2.2]OH⁻-fractions from "QMA" anion exchange cartridge

Aqueous [¹⁸F]fluoride obtained via the ¹⁸O(p,n)¹⁸F nuclear reaction was applied to 35 mg "QMA light" anion exchange cartridge which in advance had been conditioned by applying 1 M KOH (2 ml), water (20 ml), 1 M KHCO₃ (2 ml), water (20 ml), and finally 5 ml air was purged through the cartridge. [¹⁸F]fluoride was retained quantitatively on the cartridge during these steps.

Elution of [¹⁸F]fluoride from the cartridge performed with azeotropically dried solution of [K⁺2.2.2]OH⁻ in acetonitrile (167.7 mM in KOH and 250 mM in Kryptofix 2.2.2.) (solution A).

For the ¹⁸F-fluorination, [K⁺2.2.2]¹⁸F⁻ solution eluted from the resin was fractionated and collected elution aliquots mixed with the precursor in a total volume of the reaction mixture of ∼250 µl. After the desired time interval, the reaction was quenched and analyzed by means of radio thin layer chromatography.

| **Cumulative eluate volume (%)** | **¹⁸F-incorporation efficiency** |
|---|---|
| 40 | / |
| 85 | 63 |
| 131 | 60 |
| 177 | 37 |
| 278 | 27 |

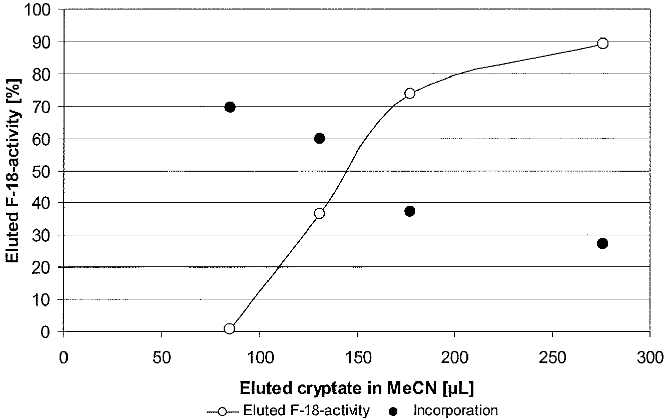

*# As measured by radio thin layer chromatography.*
*¹ Incorporation of 1-(2,3-Diacetyl-5-tosyl-(alpha-Darabinofuranosyl)-2-nitroimidazole*: 1H-Imidazole, 1-[2,3-di-O-acetyl-5-O-[(4-methylphenyl)sulfonyl]-alpha-D-arabino-furanosyl]-2-nitro-. Reaction condition: 5 mg, 95 °C, 10 min

### ¹⁸F-fluorination using total cartridge elution volume of longer stored [K⁺2.2.2]OH⁻-solution

Aqueous [¹⁸F]fluoride obtained via the ¹⁸O(p,n)¹⁸F nuclear reaction was applied to 35 mg "QMA light" anion exchange cartridge (35 mg) which in advance had been conditioned by applying 1 M KOH (2 ml), water (20 ml), 1 M KHCO₃ (2 ml), water (20 ml), and finally 5 ml air was purged through the cartridge. [¹⁸F]fluoride was retained quantitatively on the cartridge during these steps.

Elution of [¹⁸F]fluoride from the cartridge performed with an azeotropically dried solution of [K⁺2.2.2]OH⁻ in acetonitrile (167.7 mM in KOH and 250 mM in Kryptofix 2.2.2) (solution A), which was prepared at the first day of the experiments. Fractions of the solution were portioned in single vials, MeCN dried and stored in darkness. Before every experiment the residue in one vial was dissolved in the appropriate MeCN-volume evaporated before and used for elution.

For the ¹⁸F-fluorination, [K⁺2.2.2]¹⁸F⁻ solution eluted from the resin was mixed with the precursor. After the desired time interval, the reaction was quenched and analyzed by means of radio thin layer chromatography.

| **Day** | **¹⁸F -incorporation efficiency [%]¹** | |
|---|---|---|
| | **Charge 1** | **Charge 2** |
| 1 | 81 | 90 |
| 2 | 76 | - |
| 3 | 84 | 89 |
| 4 | 89 | - |
| 7 | 92 | 91 |

| | | |
|---|---|---|
| *# As measured by radio thin layer chromatography* ¹ Benzyl bromoacetate. Bromoacetic acid benzyl ester: Reaction condition: 5 mg, 85 °C, 5 min. | | |

### ¹⁸F-fluorination of precursors using the total cartridge elution volume of [K⁺2.2.2]OH⁻solution in t-butanol

Aqueous [¹⁸F]fluoride obtained via the ¹⁸O(p,n)¹⁸F nuclear reaction was applied to 35 mg "QMA light" anion exchange cartridge in question which in advance had been conditioned by applying 1 M KOH (2 ml), water (20 ml), 1 M KHCO₃ (2 ml), water (20 ml), and finally 5 ml air through the cartridge.

[¹⁸F]fluoride was retained quantitatively on the cartridge during these steps.

Elutions of [¹⁸F]fluoride from the cartridge were performed with an azeotropically dried solution of [K⁺2.2.2]OH⁻ in acetonitrile (167.7 mM in KOH and 250 mM in Kryptofix 2.2.2.) (solution A2).

For the ¹⁸F-fluorination, 230 µL Total [K⁺2.2.2]¹⁸F⁻-eluate was mixed with the precursor in question. After the desired time interval, the reaction was quenched and analyzed by means of radio thin layer chromatography.

| **Compound, Reaction condition** | **Cartridge** | **Eluted volume (µl)** | **¹⁸F-incorporation efficiency, xₘₑₐₙ±sd [%], number of experiments** |
|---|---|---|---|
| Benzyl bromoacetate¹ 5mg, 85 °C, 5 min | 35 mg QMA-HCO₃⁻ | 230 | 74.0 ± 3.0 n=2 |

| | | | |
|---|---|---|---|
| ¹ Benzyl bromoacetate, Bromoacetic acid benzyl ester: Reaction condition: 5 mg, 85 °C, 5 min. | | | |

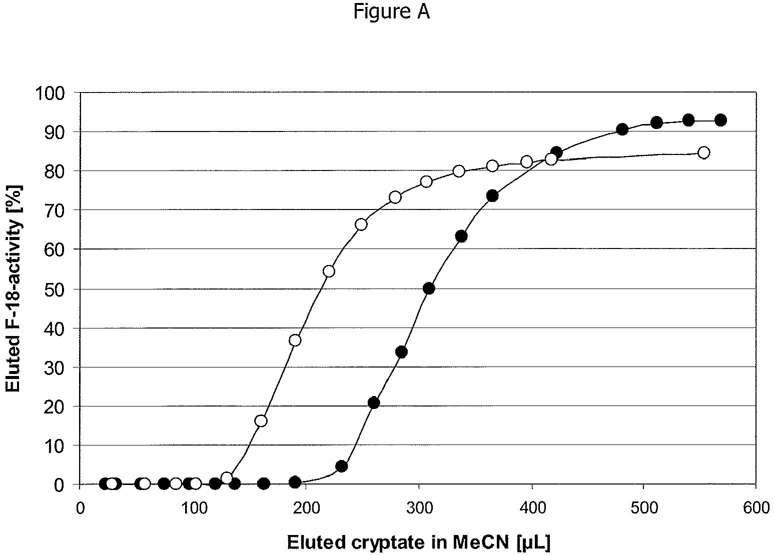

**Elution profiles for the removal of [¹⁸F]fluoride from waters QMA cartridges with solutions of different [K⁺2.2.2]OH⁻ concentration** (For detailed composition of the eluent solutions see text).

**Solution A** (black circles): [¹⁸F]fluoride activity was eluted with up to 92% efficiency from the QMA cartridge.

**Solution B** (white circles): [¹⁸F]fluoride activity was eluted form the cartridge with up to 82% efficiency. Compared to the elution with solution A, the activity was eluted earlier, but in a comparable overall volume.

**Solution C** (data not shown): [¹⁸F]fluoride activity could not be eluted from the cartridge even with 900 µL of solution C.

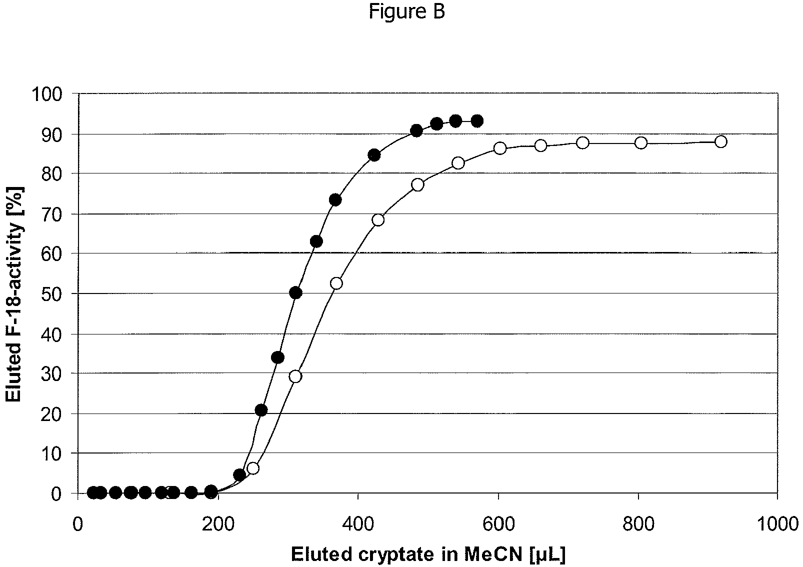

**Elution profiles for the removal of [¹⁸F]fluoride from waters QMA cartridges with solution A, but different cartridge conditioning procedures** (For detailed composition of the eluent solution see text).

**Conditioning QMA 1** (black circles): Flushing the resin with 1 M KOH (2 ml), water (20 ml), 1 M K₂CO₃ (2 ml), water (20 mL), and finally 5 ml air. Subsequent trapping of ¹⁸F-fluoride and elution with solution A.

**Conditioning QMA 2** (white circles): flushing the resin with 1 M K₂CO₃ (2 ml), water (20 mL), and finally 5 ml air. Subsequent trapping of [¹⁸F]fluoride and elution with solution A.

Compared to conditioning QMA 2 conditioning with QMA 1 provides higher ¹⁸F- recovery with a lower overall volume necessary.

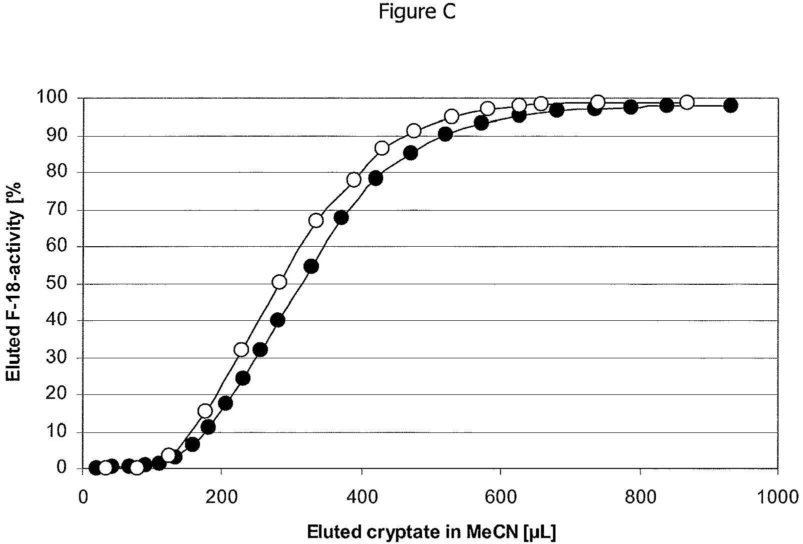

**Elution profiles for the removal of [¹⁸F]fluoride from "PSA" anionic exchange cartridges (Machery-Nagel) with solution A, but different cartridge conditioning procedures** (For detailed composition of the eluent solution see text).

**Conditioning PSA 1** (black circles): flushing the resin with 3 ml MeOH followed by 3 ml H₂O. Subsequent trapping of ¹⁸F-fluoride and elution with solution A.

**Conditioning PSA 2** (white circles): flushing the resin with 0,5 mL H₂O. Subsequent trapping of [¹⁸F]fluoride and elution with solution A.

Both conditioning procedures, PSA 1 and PSA 2, leads > 95 % overall elution with similar elution volume necessary.

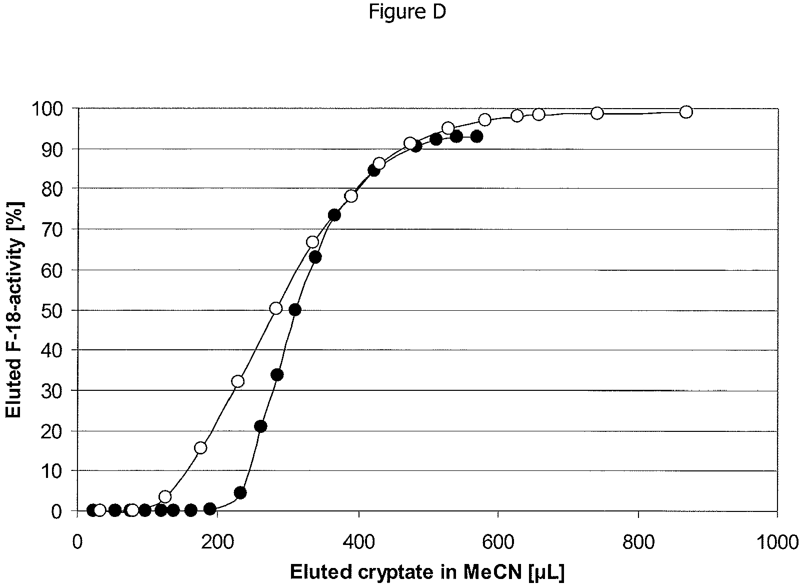

**Elution profiles for the removal of [¹⁸F]fluoride from waters "QMA light" cartridges** (black circles) **and "PSA" anion exchange cartridge (Machery-Nagel)** (white circles) **with solutions A** (For detailed composition of the eluent solution see text). Conditioning of the PSA resin was carried out as described in "conditioning PSA 1"; conditioning of the QMA cartridge was carried according to "conditioning QMA 1".

Compared to sorbent 1, [¹⁸F]fluoride activity of sorbent 2 allows a higher elution volume but offers an overall elution up to >95%.

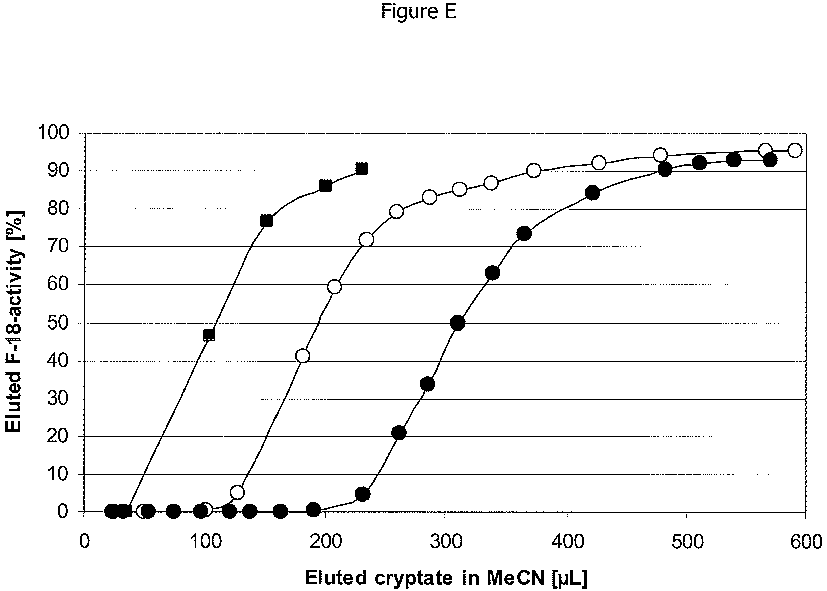

**Elution profiles for the removal of [¹⁸F]fluoride from waters QMA cartridges (Conditioning QMA 1) with different amount of sorbent (105 mg, 50 mg, 35 mg and 25 mg) using solution A** (For detailed composition of the eluent solution see text).

Black circles: 105 mg, white circles: 50 mg, black squares: 35 mg, 25 mg (data not shown).

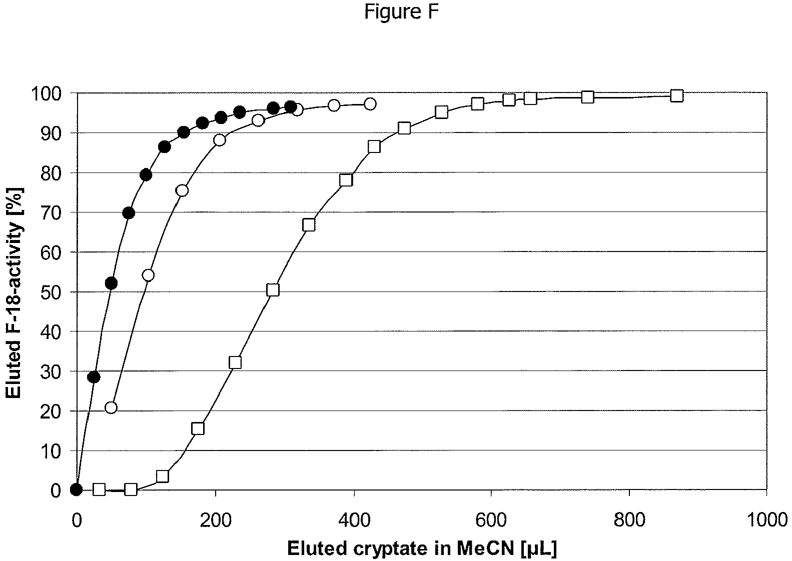

**Elution profiles for the removal of [¹⁸F]fluoride from "PSA" anion exchange cartridges (Machery-Nagel) with different amount of sorbent (6.3 mg, 15.8 mg and 6.3 mg) using solution A** (For detailed composition of the eluent solution see text).

Black circles: 6.3 mg, white circles: 15.8 mg and white squares: 45 mg

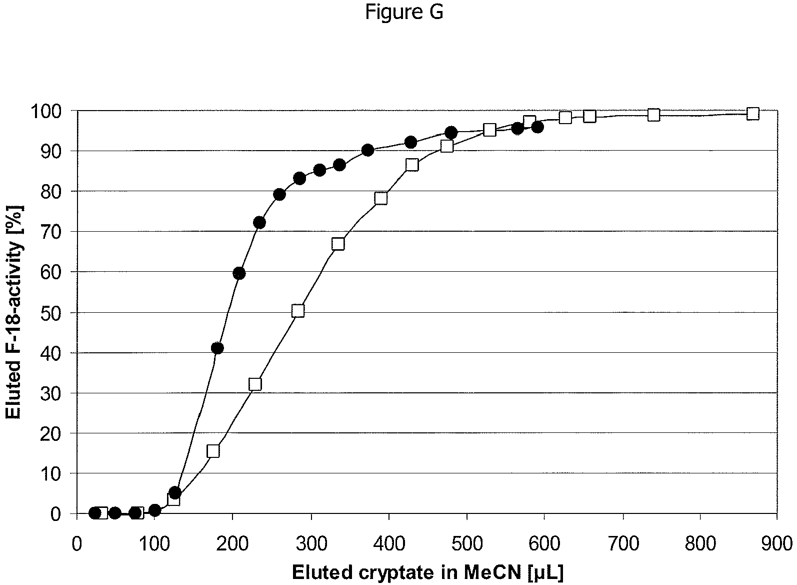

**Elution profiles for the removal of [¹⁸F]fluoride from a waters QMA cartridges** (black circles) **and "PSA" anion exchange cartridge (Machery-Nagel)** (white squares) **with solution A under optimized conditions with similar sorbent amount (∼45-50 mg) and geometry** (For detailed composition of the eluent solution see text). Conditioning of the "PSA" resin was carried out as described in "conditioning PSA 1"; conditioning of the "QMA light" cartridge was carried according to "conditioning QMA 1" (see text).

Similar overall volume necessary for similar overall elution up to 95%.

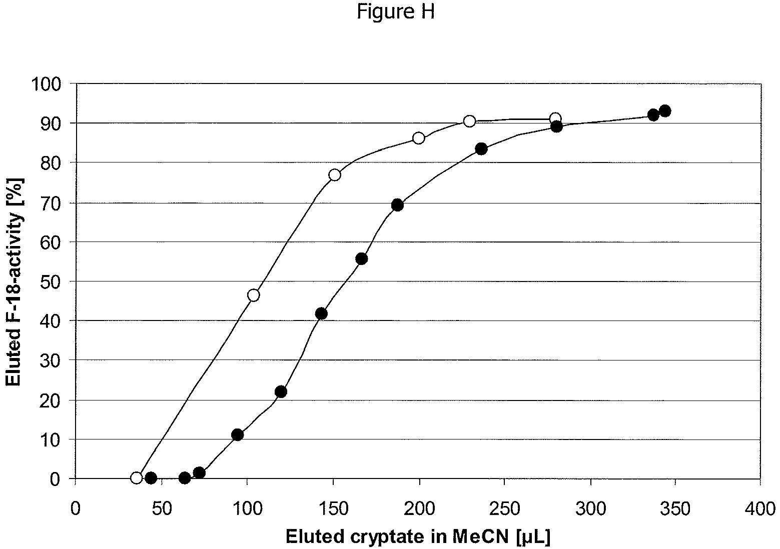

**Elution profiles for the removal of [¹⁸F]fluoride from waters QMA cartridges (35 mg) with solution A but different counterions** (For detailed composition of the eluent solution see text).

**Conditioning QMA 1** (black circles): flushing the resin with 1 M KOH (2 ml), water (20 ml), 1 M K₂CO₃ (2 ml), water (20 mL), and finally 5 ml air. Subsequent trapping of ¹⁸F-fluoride and elution with solution A.

**Conditioning QMA 3** (white circles): flushing the resin with 1 M KOH, (2 ml), water (20 ml), 1 M KHCO₃ (2 ml), water (20 ml), and finally 5 ml air.

The ¹⁸F-elution form cartridges conditioned with QMA 1 started earlier but elution volumes were necessary for both cartridge types.

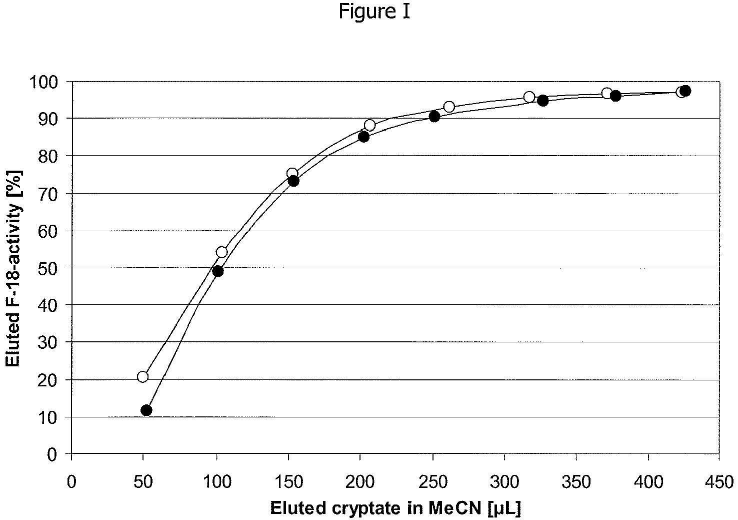

**Elution profiles for the removal of [¹⁸F]fluoride from "PSA" anion exchange cartridge (15 mg) (Machery-Nagel) with solutions of composition A (solution A), but different counterions** (For detailed composition of the eluent solution see text).

**Conditioning PSA 1** (black circles): flushing the resin with 3 ml MeOH followed by 3 ml H₂O. Subsequent trapping of ¹⁸F-fluoride and elution with solution A.

**Conditioning PSA 3** (white circles): flushing the resin with 1 M KOH, (2 ml), water (20 ml), 1 M K₂CO₃ (2 ml), water (20 ml), and finally 5 ml air.

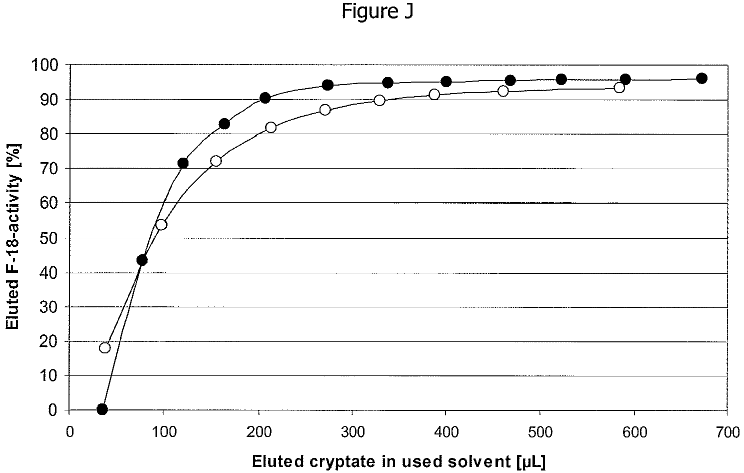

**Elution profiles for the removal of [¹⁸F]fluoride from waters QMA cartridges (35 mg) with cryptate in t-butanol** (white circles, solution A2) and **cryptate in amyl alcohol** (black circles, solution A3) (For detailed composition of the eluent solution see text).

**Conditioning QMA 1** (black circles): flushing the resin with 1 M KOH (2 ml), water (20 ml), 1 M K₂CO₃ (2 ml), water (20 mL), and finally 5 ml air. Subsequent trapping of ¹⁸F-fluoride and elution with solution A.

## Claims

1. A method to extract out of an aqueous solution, concentrate and/or reformulate [¹⁸F]fluorides without any evaporation step, in an organic solution suitable for a subsequent radiolabeling reaction, said method comprising the following steps of :
- passing said aqueous [¹⁸F]fluoride solution or solvent through a solid phase extraction column containing an anion-exchange resin so that said [¹⁸F]fluoride are trapped on said resin
- rinsing the resin with an organic solvent for eliminating the residual water that may be undesirable for a subsequent chemical processing, whilst keeping the extracted anions trapped on the resin.
- eluting said [¹⁸F]fluorides with an eluting solution so that to release said [¹⁸F]fluorides from said anion- exchange resin under a form which is reactive and immediately usable for a labeling reaction; - use the eluted solution for a radiolabeling reaction; **characterised in that** the eluting solution is a solution with a cryptate of an alkali or alkaline earth with hydroxide as counterion, containing an organic solvent suitable for the subsequent radiolabeling reaction ;

2. Method according to Claim 1, **characterised in that** said cryptate is formed by a suitable cryptand, such as 4,7,13,16,21,24-Hexaoxa-1,10-diazabicyclo[8.8.8]hexacosane (2,2,2-Cryptand, Kryptofix 222) and an hydroxide of an alkali or alkaline earth metal.

3. Method according to Claim 1, **characterised in that** said organic solvent is selected from the group consiting of acetonitrile (MeCN), dimethylsulfoxide (DMSO), dimethylacetamide (DMAA), dimethylformamide (DMF), tetrahydrofuran (THF) or other solvents that are used in the methods of prior art and primary alcohols such as methanol, ethanol, n-propanol, n-butanol, amyl alcohol, n-hexyl alcohol, n-heptanol, benzyl alcohol or n-octanol, and secondary alcohols such as isopropanol, isobutanol, isoamyl alcohol or 3-pentanol, and tertiary alcohols, diols and polyols with 1 to 20 tertiary alcohol functions such as t-butanol, t-amyl alcohol, 2, 3-dimethyl- 2-butanol, 2- (trifluoromethyl) -2-propanol, 2, 8-dimethyl- 2, 8-Decanediol or 2 , 5-dimethyl-3-Octyne-2, 5-diol.

4. Method according to Claim 1, **characterised in that**, prior to the elution step, a drying step comprising a flush of gas such as air, nitrogen, helium or argon, is used to purge the column and eliminate most of the remaining solvent.

5. Method according to Claim 1, **characterised in that** the organic solvent suitable for the subsequent radiolabeling reaction is identical to the solvent used for elution

6. Method according to Claim 1, **characterised in that** the eluting medium or the solid phase extraction column is heated up to enhance the elution efficiency.

7. Method according to Claim 1, **characterised in that** the eluted solution is diluted in a solvent suitable for the subsequent labeling reaction selected from the group consisting of acetonitrile (MeCN) , dimethylsulfoxide (DMSO), dimethylacetamide (DMAA), dimethylformamide (DMF), tetrahydrofuran (THF) or other solvents that are used in the methods of prior art and primary alcohols such as methanol, ethanol, n-propanol, n-butanol, amyl alcohol, n-hexyl alcohol, n-heptanol, benzyl alcohol or n-octanol, and secondary alcohols such as isopropanol, isobutanol, isoamyl alcohol or 3-pentanol, and tertiary alcohols, diols and polyols with 1 to 20 tertiary alcohol functions such as t-butanol, t-amyl alcohol, 2, 3-dimethyl- 2-butanol, 2- (trifluoromethyl) -2-propanol, 2, 8-dimethyl- 2, 8-Decanediol or 2 , 5-dimethyl-3-Octyne-2, 5-diol.

8. Method according to Claim 1, **characterised in that** the eluted solution is diluted with a suitable cryptate, or organic molecule, or organic salt, acting as a phase transfer catalyst, identical to or different of the cryptate used for the elution step to be added prior to labeling in the eluted [¹⁸F] fluoride solution to improve the radiolabeling yield.

9. Method according to Claim 1, **characterised in that** the anion exchange resin may subsequently, after the elution, be flushed with a solution of the precursor.

10. Method according to Claim 1, **characterised in that** the eluted solution containing the [¹⁸F] fluoride is used for the synthesis of a PET radiotracer, without any subsequent evaporation step, the [¹⁸F] fluoride being then reactive for substitution reactions on both aliphatic and aromatic precursors.

11. Method according to Claim 9, **characterised in that**, in some specific labeling reactions, a suitable cryptate, inorganic salt or organic base identical to, or different to the cryptate used for the elution step is added to the eluted [¹⁸F] fluoride solution prior to labeling to improve the radiolabeling yield.

## Patentansprüche

1. Verfahren zum Herausextrahieren aus einer wässrigen Lösung, Konzentrieren und/oder Reformulieren von [¹⁸F]-Flouriden in einem für eine anschließende Radiomarkierungsreaktion geeigneten organischen Lösungsmittel ohne einen Verdampfungsschritt, wobei das Verfahren die folgenden Schritte umfasst:
- Passieren der wässrigen [¹⁸F]-Fluorid-Lösung oder Lösungsmittel durch eine Festphasenextraktionssäule, die ein Anionenaustauscherharz enthält, so dass das [¹⁸F]-Fluorid auf dem Harz gefangen wird
- Spülen des Harzes mit einem organischen Lösungsmittel zum Eliminieren des restlichen Wassers, das für eine anschließende chemische Weiterverarbeitung unerwünscht sein kann unter Beibehalten der extrahierten auf dem Harz gefangenen Anionen.
- Eluieren der [¹⁸F]-Fluoride mit einer Elutionslösung, um so die [¹⁸F]-Fluoride von dem Anionenaustauscherharz unter einer Form freizusetzen, die reaktiv ist und unmittelbar für eine Markierungsreaktion verwendbar ist;
- Verwendung der eluierten Lösung für eine Radiomarkierungsreaktion; **dadurch gekennzeichnet, dass** die Elutionslösung eine Lösung mit einem Kryptat eines Alkali oder Erdalkali mit Hydroxid als Gegenion ist, das ein für die anschließende Radiomarkierungsreaktion geeignetes organisches Lösungsmittel enthält.

2. Verfahren nach Anspruch 1, **dadurch gekennzeichnet, dass** das Kryptat durch einen geeigneten Kryptanden gebildet wird, wie 4,7,13,16,21,24-Hexaoxa-1,10-diazabicyclo[8.8.8]hexacosan (2,2,2-Kryptand, Kryptofix 222) und einem Hydroxid eines Alkali- oder Erdalkalimetalls.

3. Verfahren nach Anspruch 1, **dadurch gekennzeichnet, dass** das organische Lösungsmittel ausgewählt ist aus der Gruppe, bestehend aus Acetonitril (MeCN), Dimethylsulfoxid (DMSO), Dimethylacetamid (DMAA), Dimethylformamid (DMF), Tetrahydrofuran (THF) oder anderen Lösungsmitteln, die in den Verfahren des Stands der Technik verwendet werden, und primären Alkoholen wie Methanol, Ethanol, n-Propanol, n-Butanol, Amylalkohol, n-Hexylalkohol, n-Heptanol, Benzylalkohol oder n-Oktanol, und sekundären Alkoholen wie Isopropanol, Isobutanol, Isoamylalkohol oder 3-Pentanol, und tertiären Alkoholen, Diolen und Polyolen mit 1 bis 20 tertiären Alkoholfunktionen wie t-Butanol, t-Amylalkohol, 2,3-Dimethyl-2-butanol, 2-(Trifluormethyl)-2-propanol, 2,8-Dimethyl-2,8-Decandiol oder 2,5-Dimethyl-3-oktin-2,5-diol.

4. Verfahren nach Anspruch 1, **dadurch gekennzeichnet, dass** vor dem Elutionsschritt ein Trocknungsschritt, der ein Spülen von Gas wie Luft, Stickstoff, Helium oder Argon umfasst, verwendet wird, um die Säule zu spülen und das meiste des verbleibenden Lösungsmittels zu eliminieren.

5. Verfahren nach Anspruch 1, **dadurch gekennzeichnet, dass** das für die anschließende Radiomarkierungsreaktion geeignete organische Lösungsmittel zu dem zur Elution verwendeten Lösungsmittel identisch ist.

6. Verfahren nach Anspruch 1, **dadurch gekennzeichnet, dass** das Elutionsmedium oder die Festphasenextraktionssäule erhitzt wird, um die Elutionseffizienz zu verstärken.

7. Verfahren nach Anspruch 1, **dadurch gekennzeichnet, dass** die eluierte Lösung in einem Lösungsmittel verdünnt wird, das für die anschließende Radiomarkierungsreaktion geeignet ist, ausgewählt aus der Gruppe, bestehend aus Acetonitril (MeCN), Dimethylsulfoxid (DMSO), Dimethylacetamid (DMAA), Dimethylformamid (DMF), Tetrahydrofuran (THF) oder anderen Lösungsmitteln, die in den Verfahren des Stands der Technik verwendet werden, und primären Alkoholen wie Methanol, Ethanol, n-Propanol, n-Butanol, Amylalkohol, n-Hexylalkohol, n-Heptanol, Benzylalkohol oder n-Oktanol, und sekundären Alkoholen wie Isopropanol, Isobutanol, Isoamylalkohol oder 3-Pentanol, und tertiären Alkoholen, Diolen und Polyolen mit 1 bis 20 tertiären Alkoholfunktionen wie t-Butanol, t-Amylalkohol, 2,3-Dimethyl-2-butanol, 2-(Trifluormethyl)-2-propanol, 2,8-Dimethyl-2,8-Decandiol oder 2,5-Dimethyl-3-oktin-2,5-diol.

8. Verfahren nach Anspruch 1, **dadurch gekennzeichnet, dass** die eluierte Lösung mit einem geeigneten Kryptat oder organischem Molekül oder organischem Salz, das als ein Phasentransferkatalysator agiert, das identisch zu dem Kryptat ist oder sich davon unterscheidet, das für den Elutionsschritt verwendet wird, hinzuzufügen vor dem Markieren in der eluierten [¹⁸F]-Fluorid-Lösung, um die Ausbeute der Radiomarkierung zu verbessern, verdünnt wird.

9. Verfahren nach Anspruch 1, **dadurch gekennzeichnet, dass** das Anionenaustauscherharz nach der Elution anschließend mit einer Lösung des Vorläufers gespült werden kann.

10. Verfahren nach Anspruch 1, **dadurch gekennzeichnet, dass** die das [¹⁸F]-Fluorid enthaltende eluierte Lösung für die Synthese eines PET Radiomarkers ohne anschließenden Verdampfungsschritt verwendet wird, wobei das [¹⁸F]-Fluorid dann für Substitutionsreaktionen mit sowohl aliphatischen als auch aromatischen Vorläufern reaktiv ist.

11. Verfahren nach Anspruch 9 **dadurch gekennzeichnet, dass** in einigen spezifischen Markierungsreaktionen ein geeignetes Kryptat, anorganisches Salz oder eine organische Base, das/die zu dem in dem Elutionsschritt verwendeten Kryptat identisch ist oder sich davon unterscheidet, zu der eluierten [¹⁸F]-Fluorid-Lösung vor dem Markieren hinzugefügt wird, um die Ausbeute der Radiomarkierung zu verbessern.

## Revendications

1. Procédé pour extraire d'une solution aqueuse, concentrer et/ou de reformuler des fluorures [¹⁸F] sans aucune étape d'évaporation, dans une solution organique appropriée à une réaction de radiomarquage subséquente, ledit procédé comprenant les étapes suivantes de :
- passage desdits solution aqueuse ou solvant de fluorures [¹⁸F] à travers une colonne d'extraction en phase solide contenant une résine échangeuse d'anions de façon à ce que lesdits fluorures [¹⁸F] soient piégés sur ladite résine
- rinçage de la résine avec un solvant organique pour éliminer l'eau résiduelle qui peut être indésirable pour un traitement chimique subséquent, tout en maintenant les anions extraits piégés sur la résine,
- élution desdits fluorures [¹⁸F] avec une solution d'élution de façon à libérer lesdits fluorures [¹⁸F] de ladite résine échangeuse d'anions sous une forme qui est réactive et immédiatement utilisable pour une réaction de marquage ;
- utilisation la solution éluée pour une réaction de radiomarquage ; **caractérisé en ce que** la solution d'élution est une solution avec un cryptate d'un alcalin ou d'un alcalinoterreux avec l'hydroxyde comme contre-ion, contenant un solvant organique approprié à la réaction de radiomarquage subséquente.

2. Procédé selon la revendication 1, **caractérisé en ce que** ledit cryptate est formé par un cryptand approprié, tel que le 4,7,13,16,21,24-hexaoxa-1,10-diazabicyclo[8.8.8]hexacosane (2,2,2-cryptand, Kryptofix 222) et un hydroxyde d'un métal alcalin ou alcalinoterreux.

3. Procédé selon la revendication 1, **caractérisé en ce que** ledit solvant organique est choisi parmi le groupe consistant en l'acétonitrile (MeCN), le diméthylsulfoxyde (DMSO), le diméthylacétamide (DMAA), le diméthylformamide (DMF), le tétrahydrofurane (THF) ou autres solvants qui sont utilisés dans les procédés de la technique antérieure et les alcools primaires tels que le méthanol, l'éthanol, le n-propanol, le n-butanol, l'alcool amylique, l'alcool n-hexylique, le n-heptanol, l'alcool benzylique ou n-octanol, et les alcools secondaires tels que l'isopropanol, l'isobutanol, l'alcool isoamylique ou 3-pentanol, et les alcools tertiaires, les diols et les polyols avec 1 à 20 fonctions alcool tertiaire tels que le t-butanol, l'alcool t-amylique, le 2,3-diméthyl-2-butanol, le 2-(trifluorométhyl)-2-propanol, le 2,8-diméthyl-2,8-décanediol ou le 2,5-diméthyl-3-octyne-2,5-diol.

4. Procédé selon la revendication 1, **caractérisé en ce que**, avant l'étape d'élution, une étape de séchage comprenant une injection de gaz tel que l'air, l'azote, l'hélium ou l'argon, est utilisée pour purger la colonne et éliminer la plus grande partie du solvant restant.

5. Procédé selon la revendication 1, **caractérisé en ce que** le solvant organique approprié à la réaction de radiomarquage subséquente est identique au solvant utilisé pour l'élution.

6. Procédé selon la revendication 1, **caractérisé en ce que** le milieu d'élution ou la colonne d'extraction en phase solide est chauffé(e) pour améliorer l'efficacité d'élution.

7. Procédé selon la revendication 1, **caractérisé en ce que** la solution éluée est diluée dans un solvant approprié à la réaction de marquage subséquente choisi parmi le groupe consistant en l'acétonitrile (MeCN), le diméthylsulfoxyde (DMSO), le diméthylacétamide (DMAA), le diméthylformamide (DMF), le tétrahydrofurane (THF) ou autres solvants qui sont utilisés dans les procédés de la technique antérieure et les alcools primaires tels que le méthanol, l'éthanol, le n-propanol, le n-butanol, l'alcool amylique, l'alcool n-hexylique, le n-heptanol, l'alcool benzylique ou n-octanol, et les alcools secondaires tels que l'isopropanol, l'isobutanol, l'alcool isoamylique ou 3-pentanol, et les alcools tertiaires, les diols et les polyols avec 1 à 20 fonctions alcool tertiaire tels que le t-butanol, l'alcool t-amylique, le 2,3-diméthyl-2-butanol, le 2-(trifluorométhyl)-2-propanol, le 2,8-diméthyl-2,8-décanediol ou le 2,5-diméthyl-3-octyne-2,5-diol.

8. Procédé selon la revendication 1, **caractérisé en ce que** la solution éluée est diluée avec un cryptate, ou une molécule organique, ou un sel organique approprié(e), agissant comme un catalyseur de transfert de phase, identique au ou différent du cryptate utilisé pour l'étape d'élution devant être ajouté(e) avant le marquage dans la solution éluée de fluorures [¹⁸F] pour améliorer le rendement de radiomarquage.

9. Procédé selon la revendication 1, **caractérisé en ce que** la résine échangeuse d'anions peut ensuite, après l'élution, être rincée avec une solution du précurseur.

10. Procédé selon la revendication 1, **caractérisé en ce que** la solution éluée contenant le fluorure [¹⁸F] est utilisée pour la synthèse d'un radiotraceur de TEP, sans aucune étape d'évaporation subséquente, le fluorure [¹⁸F] étant alors réactif pour des réactions de substitution sur des précurseurs tant aliphatiques qu'aromatiques.

11. Procédé selon la revendication 9, **caractérisé en ce que**, dans certaines réactions de marquage spécifiques, un cryptate, un sel inorganique ou une base organique approprié(e) identique au ou différent du cryptate utilisé pour l'étape d'élution est ajouté(e) à la solution éluée de fluorures [¹⁸F] avant le marquage pour améliorer le rendement de radiomarquage.
